Europäisches Patentamt

European Patent Office

Office européen des brevets

(19)

(11) Veröffentlichungsnummer: **0 226 237**
**A1**

(12) **EUROPÄISCHE PATENTANMELDUNG**

(21) Anmeldenummer: 86201984.1

(51) Int. Cl.⁴: **B27M 3/32** , B23Q 7/03

(22) Anmeldetag: 12.11.86

(30) Priorität: 27.11.85 NL 8503288

(43) Veröffentlichungstag der Anmeldung:
24.06.87 Patentblatt 87/26

(84) Benannte Vertragsstaaten:
AT BE CH DE ES FR GB GR IT LI LU NL SE

(71) Anmelder: **Klok, Maas**
**Edeseweg 9**
**NL-6733 AA Wekerom(NL)**

(72) Erfinder: **Klok, Maas**
**Edeseweg 9**
**NL-6733 AA Wekerom(NL)**

(74) Vertreter: **van der Beek, George Frans et al**
**Nederlandsch Octrooibureau Johan de**
**Wittlaan 15 P.O. Box 29720**
**NL-2502 LS 's-Gravenhage(NL)**

(54) **Einrichtung zum Anspitzen und/oder Abkanten von Pfählen.**

(57) Vorrichtung zum Anspitzen und/oder Abkanten runder hölzener Pfähle, wobei das Anspitzen und Abkanten stattfindet mit um ihre Achse rotierenden Fräsen, wobei die Pfähle während der eigentlichen Fräsbearbeitung in eine Rotation um ihre eigene Achse versetzt werden und gleichzeitig den Vorschub über das Fräsgebiet erhalten. Die Fräsen sind dazu einstellbar, fest montiert gegenüber dem Rahmen der Vorrichtung, während die Pfähle parallel zu sichselbst den Vorschub erhalten. Dabei kann jedesmal ein Pfahl bearbeitet werden, wobei jeder Pfahl auf einem querbeweglichen Wagen rotierend gelagert ist, jedoch ist auch eine kontinuierliche Querförderung von Pfahl nach Pfahl vorgesehen, wobei der querbewegliche Wagen ersetzt ist durch Quertransportketten, welche die Pfähle zwischen sich einklemmen um den Vorschub durch das Fräsgebiet und gleichzeitig ihre Rotation um ihre Längsachse zu bewirken. Von Vorteil ist der kurze Bau der Vorrichtung ohne jegliche axiale Bewegung der Pfähle und der Fräsen bei der Bearbeitung.

Fig. 1

## Einrichtung zum Anspitzen und/oder Abkanten von Pfählen.

Die Erfindung betrifft eine Einrichtung zum Anspitzen und/oder Abkanten runder Pfähle. Einrichtungen dieser Art sind bekannt, unter anderem aus der Europäischen Patentanmeldung 0.066.368. Bei dieser Einrichtung wird der anzuspitzende Pfahl axial in die Maschine geführt und danach durch eine relative axiale Vorschubbewegung der Schneiden gegenüber dem Pfahl mit einer mehrflächigen Spitze versehen. Die Maschine kann ausschließlich schrittweise arbeiten, und nach jedem vollendeten Anspitzvorgang muß der Pfahl axial aus der Maschine entfernt und der nächste Pfahl eingeführt werden. Ein hinzukommender Nachteil der Maschine kann sein, daß die beim Anspitzen entfernten Holzteile grob und noch nicht zu kleinen Stücken verspant sind, wie dies oft für einen nützlichen Gebrauch des Abfallholzes in beispielsweise daraus herzustellender Spanplatte erforderlich ist. Während des Anspitzvorgangs steht der Pfahl bei dieser Einrichtung still.

Aus der niederländischen Patentanmeldung 7406810 ist eine Einrichtung bekannt, bei der der anzuspitzende Pfahl ebenfalls axial eingeführt und beim Anspitzen axial vorgeschoben wird, wobei der Pfahl gegenüber der Einrichtung nicht rotieren soll. Die Schneideinrichtung besteht aus einer kegelförmigen Trommel, wie bei den handbedienten Bleistiftspitzern bekannt, wobei eine oder mehrere Schneiden rotierend über einen Kegelmantel mit mit der Achse des anzuspitzenden Pfahls zusammenfallender Achse angetrieben werden. Man könnte diese Einrichtung als mechanisierte Anspitzmaschine bezeichnen, wobei die Schneidtrommel dreht und der Pfahl stillsteht und auf übliche Weise axial eingesteckt wird, um den Vorschub zu erhalten. Auch diese Einrichtung funktioniert schrittweise, so daß nach jedem Anspitzvorgang der Pfahl axial entfernt werden muß, bevor der nächste eingeführt werden kann. Das beim Anspitzen entfernte Material ist hobelspanförmig und ebenfalls nicht ohne weiteres für Verarbeitung zu Spanplatten geeignet.

Beide oben beschriebenen bekannten Einrichtungen haben darüberhinaus den Nachteil, daß sie verhältnismäßig viel Raum beanspruchen, weil die zu bearbeitenden Pfähle axial eingeführt und abgeführt werden müssen.

Die Erfindung bezweckt die Schaffung einer Einrichtung, die die obenerwähnten Nachteile nicht hat und die sowohl als schrittweise funktionierende Maschine wie auch als kontinuierlich funktionierende Maschine ausgeführt sein kann. Der erforderliche Raumbedarf ist nicht viel länger als die Länge des längsten zu bearbeitenden Pfahls.

Die erfindungsgemäße Einrichtung wird dadurch gekennzeichnet, daß sie enthält.
-einen länglichen Rahmen,
-wenigstens eine darauf angeordnete Querförderanlage, die dafür ausgelegt ist, einem oder mehreren in Längsrichtung darauf mitgenommenen Pfählen sowohl eine Vorschubbewegung in Querrichtung gegenüber dem länglichen Rahmen wie auch eine Rotation um seine/ihre Achse zu geben,
-wenigstens eine auf dem Rahmen befestigte rotierend angetriebene Fräse, deren Rotationsachse in einem Winkel zur Richtung der Achse eines Pfahls steht, wenn dieser durch die Querförderanlage in den Arbeitsbereich der Fräse gebracht worden ist, welcher Winkel eine Komponente sowohl gegenüber der waagerechten wie gegenüber der senkrechten Ebene haben kann, wobei der wirksame Bereich der Schnittfläche der Fräse hö henverstellbar gegenüber der Ebene ist, in der Querverstellung des Pfahls stattfindet, und wobei die Position der Fräse (der Fräsen) in Längsrichtung des Rahmens zur Anpassung an die Pfahllänge einstellbar ist.

Die beschriebene Einrichtung ist in allererster Linie für die Bearbeitung runder Pfähle gedacht. Das Ausgangsprodukt, ein Baum, hat ja ebenfalls einen runden Stamm. Um die Lebensdauer der Pfähle zu verlängern, wird das Holz oft imprägniert, was nur gut möglich ist, wenn der Baumstamm vorher geschält und somit entrindet worden ist. Das Schälverfahren geht von runden Pfählen aus und liefert auch runde Pfähle. Für alle anderen Pfahlquerschnitte, beispielsweise oval, quadratisch, rechteckig und ähnliche, sind zusätzliche Bearbeitungsgänge erforderlich, während außerdem Holzverlust eintritt. Sollten jedoch im Einzelfall andere als runde Pfähle angespitzt und/oder abgekantet werden müssen, dann kann dies ebenfalls mit der erfindungsgemäßen Einrichtung geschehen, wenn an den Stellen, an denen der Pfahl von der Querförderanlage gegriffen wird, Hilfswerkzeug eingesetzt wird. Dafür können gelenkige Backen angewandt werden, die in geschlossenem Zustand eine innere Öffnung haben, die genau um den Querschnitt des Pfahls paßt und deren Außenumriß zylindrisch ist und eine mit der Achse des Pfahls zusammenfallende Achse hat. Dank der weiter unten beschriebenen Förderanlage brauchen diese Backen nicht weiter geschlossen zu werden. Vor und nach der Bearbeitung eines solchen Pfahls soll das Hilfswerkzeug angebracht beziehungsweise abgenommen werden.

Indem sowohl der Pfahl wie die Fräse während des Fräsvorgangs ins Rotieren versetzt werden, entsteht eine einwandfreie runde Spitze und Abkantung an jedem Pfahl, ungeachtet seines Durchmessers. Durch Einstellung des Winkels, in dem die Rotationsachse der Fräse zum Pfahl steht, kann eine mehr oder weniger scharfe Spitze hergestellt werden. Durch richtige Einstellung der Fräse gegenüber dem anzuspitzenden Pfahlende kann ebenfalls einfach eine stumpfe Spitze hergestellt werden, wenn dies wegen der Bodenverhältnisse an der Stelle, an der der Pfahl eingesetzt werden soll, beispielsweise bei steinigem Boden, erforderlich sein sollte.

Nach einer Vorzugsausführungsform befindet sich in der Nähe jeden Endes des Rahmens eine rotierende Fräse, deren Winkel und eventuell auch Höhe individuell gegenüber dem zu bearbeitenden Pfahl eingestellt werden kann, so daß ein Pfahl entweder an einem oder an beiden Enden angespitzt oder abgekantet, oder aber an einem Ende angespitzt und am anderen Ende abgekantet werden kann. Damit können Pfähle gleichzeitig sowohl mit einer Spitze wie mit einer Abkantung versehen werden. Weil die Spitze oft einen spitzen Winkel zur Achse des Pfahls hat, die Abkantung jedoch einen Winkel von 45° oder größer, ist es vorteilhaft, daß der Winkel jeder Fräse einzeln eingestellt werden kann. Dies ermöglicht auch die Herstellung von Pfählen mit doppelter Abkantung oder ausnahmsweise die Fertigung von Pfählen mit Spitzen an beiden Enden.

Weil die Position der Fräse(n) gegenüber dem Rahmen auch in Längsrichtung eingestellt werden kann, können auch kurze Pfähle bearbeitet werden. Sollte jedoch sehr viel langes Holz verfügbar sein, während kurze Pfähle verlangt werden, dann kann nach einer Vorzugsausführungsform zwischen den beiden Fräsen in der Nähe der Rahmenenden eine dritte rotierende Säge-Fräs-Einheit angebracht werden, um zwischen den Enden des Pfahls diesen entweder abzukanten und durchzusägen oder ihn anzuspitzen und erforderlichenfalls durchzusägen, so daß zwei kurze vollverarbeitete Pfähle entstehen. Es wird klar sein, daß die Querförderanlage dazu angepaßt werden muß. Dies wird unten näher erläutert. Weitere Merkmale und Vorzugsausführungsformen der Fräse und ihrer Positionierung sind näher in der Abbildungsbeschreibung und in den Patentansprüchen erläutert. Sie sind alle dafür ausgelegt, einfache Standardfräsen anzuwenden, die sich bequem schleifen lassen, kurze Späne abgeben und eine ausreichend glatt verarbeitete Oberfläche auf dem. Pfahl anbringen können.

Die oben mehr allgemein beschriebene Einrichtung kann für schrittweises Anspitzen und/oder Abkanten von Pfahl um Pfahl ausgelegt sein, aber auch für kontinuierliche Bearbeitung. Dies beeinflußt namentlich die Ausführung der Querförderanlage.

Von einer erfindungsgemäßen, für die - schrittweise Bearbeitung bestimmten Einrichtung wird eine Vorzugsausführungsform dadurch gekennzeichnet, daß die Querförderanlage einen in Querrichtung im Rahmen geführten Wagen umfaßt, mit Antriebsvorrichtungen für einen schnellen Zufuhrhub, gefolgt von einem langsamen Vorschub über die Bearbeitungsstrecke und einem schnellen Rückhub über den gesamten Hub der Querverstellung. Dieser Bewegungszyklus für die Querförderanlage ist vorteilhaft, wenn die Beschickung und die Entladung der Einrichtung mit jeweils einem Pfahl nur auf einer der Seiten der Einrichtung geschieht. Dies kann sowohl von Hand wie auch mechanisiert erfolgen. Es sei darauf hingewiesen, daß mit derselben Einrichtung auch ein anderer schrittweiser Zyklus möglich ist, wobei die Beschickung mit einem Pfahl auf einer Seite erfolgt, wonach während der Querverstellung die Bearbeitung und dann die Entladung auf der anderen Längsseite der Einrichtung erfolgen. Danach wird auf dieser anderen Seite ein neuer Pfahl geladen, der durch die Frässtrecke geführt wird, so daß der Förderwagen wieder die erste Seite erreicht, um dort dann den bearbeiteten Pfahl abzugeben und mit einem neuen Pfahl beschickt zu werden. Bei der letzten Zyklusform passieren die Pfähle die Fräsen, so daß die Fräsen vorzugsweise über oder eventuell unter den Pfählen angebracht werden sollen. Bei der ersteren Zyklusform ist es möglich, die Fräsen etwa in der Ebene, in der die Querverstellung der Pfähle erfolgt, rotieren zu lassen, wofür es erforderlich ist, daß der Hub der Querverstellung am Schluß des Vorschubs im richtigen Augenblick gestoppt wird, nämlich, wenn die Spitze an dem Pfahl an der gewünschten Stelle an der Länge des Pfahls gefräst worden ist.

Für die Rotation der Pfähle während der Querverstellung und namentlich über die Frässtrecke ist die Vorzugskonstruktion dadurch gekennzeichnet, daß auf dem Wagen wenigstens zwei synchron rotierend angetriebene Stützrollenpaare zur rotierenden Stützung des Pfahls angebracht sind, jedes Paar in der Nä he einer Fräse am Ende des Rahmens, wobei der Abstand der Stützrollen jeden Paars zueinander als Funktion der Dicke des zu bearbeitenden Pfahls einstellbar ist, und wobei alle Rollen in derselben Richtung synchron mittels eines Kettengetriebes oder dergleichen in jedem Paar und einer axial ausziehbaren Kardanwelle oder dergleichen zwischen den Paaren angetrieben werden.

Vor allem wenn die zu bearbeitenden Pfähle verhältnismäßig leicht im Gewicht sind und die Bearbeitung schnell mit großer Leistung geschehen soll, und folglich große Fräskräfte auf die Pfahlenden ausgeübt werden, ist nicht sicher, daß die Pfähle durch ihr eigenes Gewicht sicher auf den Stützrollenpaaren liegen bleiben. Dazu wird nach einer weiteren Vorzugsausführungsform die Einrichtung dadurch gekennzeichnet, daß auf dem Rahmen senkrecht über jedem Stutzrollenpaar eine stationäre Niederhaltevorrichtung angebracht ist, die nur den Bereich der Querbewegung, auf dem der Pfahl gefräst wird, bestreicht, welche Niederhaltevorrichtung je zwei freidrehend gelagerte Scheiben mit der Rotationsachse parallel zur Pfahlachse umfaßt, und welche beide in der senkrechten Ebene durch das zugehörige Stützrollenpaar gelegen sind, und wobie die Achsen der Niederhaltescheiben wenigstens in einem mit der Frässtrecke übereinstimmenden Abstand voneinander entfernt sind und über die beiden Scheiben jeden Paars ein Riemen, beispielsweise ein Keilriemen, straff gespannt ist,

wobei jede Niederhaltevorrichtung um eine waagerechte Achse parallel zur Achse des Pfahls in Abstand von der Frässtrecke und ungefähr in Höhe des Pfahls gelenkig an dem Rahmen befestigt ist und durch eine federnde Niederhaltevorrichtung auf einen einstellbaren Anschlag herabgedrückt wird, wobei der Abstand im Ruhezustand zwischen der Oberseite der Stützrollen und der Unterseite der Niederhaltescheiben etwas geringer ist als die Dicke des Pfahls,

die alles in der Weise, daß ein auf die Stützrollen gelegter Pfahl mitrotiert und rotierend durch den Quervorschub des Wagens gegen die Einlaufkante der Unterseite des umspannenden Riemens stößt und sich dieser daraufhin federnd nach oben - scharnierend dreht, wobei der rotierende Pfahl den frei rotierenden Riemen mitrotieren läßt, wodurch eine feste Einschließung und rotierender Antrieb des Pfahls während des gesamten Fräsvorgangs auf der Frässtrecke gewährleistet sind.

Versuche haben ergeben, daß durch Anwendung der Niederhaltevorrichtung die Eigenrotation des Pfahls und seine Lage auf dem Stützrollenpaar des Wagens so stabil ist, daß die gesamte Fräsbearbeitung in etwa 2 Sekunden beendet sein kann, unter der Voraussetzung, daß ausreichende Antriebsleistung für die Fräsen vorhanden ist. Eine Gesamtzyklusdauer von etwa 5 Sekunden ist somit erreichbar. Um etwaigen Schwingungen im Pfahl während des Fräsvorgangs vorzubeugen, ist es erwünscht, die Stützrollen und die Niederhaltevorrichtung möglichst nahe der betreffenden Fräse anzuordnen. Im Blick auf eine bequeme Auswechselbarkeit und Erreichbarkeit der Fräsen ist es vorteilhaft, diese über der Förderebene der Pfähle anzubringen. Damit wird ebenfalls eine stabilere Lage des Pfahls während des Fräsvorgangs erreicht, da die Fräskräfte vorwiegend nach unten gerichtet sein werden.

Wenn von längeren Pfählen in einem einzigen Bearbeitungsdurchgang zwei kürzere angespitzt und/oder abgekantet werden, dann wird die Einrichtung vorzugsweise mit einem zusätzlichen Stützrollenpaar mit zugehöriger Niederhaltevorrichtung zu beiden Seiten der dritten oder mittleren Säge-Fräseinheit versehen. Beim Durchsägen oder Durchfräsen des langen Ausgangspfahls werden ja die beiden übrigbleibenden kurzen Pfähle ebenfalls sicher gestützt bleiben müssen.

Ist die Einrichtung für den kontinuierlichen Betrieb bestimmt, dann wird die Querförderanlage dafür geeignet sein müssen. Nach einer Vorzugsausführungsform ist die Einrichtung dazu dadurch gekennzeichnet, daß der wirksame Bereich der schneidenden Fläche jeder Fräse vorzugsweise über (oder eventuell unter) der Ebene, in der die Querverstellung dieses Pfahls erfolgt, gelegen ist, daß die Querförderanlage aus wenigstens zwei endlosen, gespannten Förderketten oder dergleichen besteht, die in der senkrechten Ebene parallel zueinander und senkrecht auf der Achse der Pfähle mit Umleitungsrädern auf dem Rahmen gelagert und synchron anzutreiben sind, wobei der obere Teil im Betrieb die Pfähle trägt, und daß über jeder Förderkette in derselben senkrechten Ebene eine endlose gespannte Niederhaltekette angebracht ist, die höhenverstellbar auf dem Rahmen mit Umleitungsrädern gelagert ist und mit ihrem unteren Teil die Pfähle herabdrückt und dabei parallel zu dem oberen Teil der zugehörigen Förderkette verläuft, und wobei beide Niederhalteketten synchron angetrieben werden können. Eine Bedingung für die einwandfreie Funktion der mit Förderketten und Niederhalteketten versehenen Querförderanlage ist, daß die Pfähle korrekt parallel zueinander und genau senkrecht zur Förderanlage darauf abgestellt werden. Dazu können bekannte Einrichtungen angewandt werden, die nicht weiter beschreiben zu werden brauchen. Es ist aber auch notwendig, daß während der Querförderung und vor allem während des Fräsvorgangs die betreffenden Pfähle trotz der manchmal großen auf sie ausgeübten Kräfte ihre Bahn mit der Förderkette richtig beibehalten. Dazu ist es erwünscht, auf bekannte Weise die Ketten mit feinen scharfzackigen Mitnehmern zu versehen. Diese Mitnehmer sollen fein gezackt sein, um die Pfähle einerseits fest festgreifen zu können und anderseits deren Oberfläche nicht zu stark zu beschädigen und auch die Eigenrotation der Pfähle während der Querförderung nicht zu hemmen.

Sowohl für die Stützrollen bei der schrittweise funktionierenden Querföranlage wie auch bei den Förder-und Niederhalteketten für die kontinuierlich funktionierende Querföranlage ist - schon angegeben worden, daß alle diese Teile synchronisiert miteinander angetrieben werden sollen. Dies kann mit bekannten Einrichtungen gemacht werden, beispielsweise mit Kettengetrieben und mit ein-und ausziehbaren Kardanwellen, aber auch mit elektronisch synchron gesteuerten individuellen Antriebsmotoren.

Damit mit der oben beschriebenen kontinuierlich funktionierenden Querföranlage nicht nur die Querförderung und der Vorschub erhalten wird, sondern auch eine Rotation der Pfähle um deren eigene Achse, wird die Erfindung gemäß einer Vorzugsausführungsfom dadurch gekennzeichnet, daß im Betrieb der obere Teil jeder Förderkette mit einer Geschwindigkeit $|V_{tr}|$ in Vorschubrichtung bewegt und der untere Teil jeder Niederhaltekette mit einer Geschwindigkeit $|V_n|$ entgegen der Vorschubrichtung bewegt, dies alles in der Weise, daß jeder zwischen den Ketten eingeklemmter Pfahl um seine Achse mit einer Umfangsgeschwindigkeit $|V_{tr}|$ entgegen der Vorschubrichtung rotiert und zugleich eine Vorschubgeschwindigkeit

$$|V_a| = \frac{|V_{tr}| - |V_n|}{2}$$

hat, wobei $|V_{tr}| > |V_n|$.

Die Geschwindigkeitsangabe zwischen zwei senkrechten Strichen gibt einen absoluten Wert an, während die Richtung gesondert umschrieben ist. Es wird klar sein, daß, wenn $|V_{tr}|$ und $|V_n|$ entgegengesetzte Richtung jedoch gleiche Größe haben, die Pfähle mit einer Umfangsgeschwindigkeit von $|V_{tr}|$ oder $|V_n|$ rotieren, daß sie jedoch keine Querförderung beziehungsweise keinen Vorschub mehr haben. Indem man $|V_{tr}|$ etwas größer als $|V_n|$ sein läßt, nimmt die Rotationsgeschwindigkeit der Pfähle etwas ab, es wird aber die gewünschte Querförderung mit der Vorschubgeschwindigkeit $|V_a|$ erhalten. Die Praxis hat gezeigt, daß für die am meisten vorkommenden Fichtenholzpfähle dieser Pfahl etwa 10 Umdrehungen auf der Frässtrecke machen soll, während welcher Umdrehungen die Spitze und die Abkantung vollständig gefräst worden sind. Aus den Formeln ergibt sich der Zusammenhang zwischen der Umfangsgeschwindigkeit des Pfahls und der Vorschubgeschwindigkeit. Die installierte Leistung für die Querföranlagen und vor allem für die Fräsen soll aufeinander abgestimmt sein. Im Blick auf eine möglichst stabile Lage der Pfähle und der Vermeidung von Schwingungen wird es in vielen Fällen erwünscht sein, die Rotation der Fräse in einer der Rotationsrichtung der Pfähle entgegensetzten Richtung verlaufen zu lassen.

Der Abstand zwischen den Querförderketten und den zugehörigen Niederhalteketten ist einstellbar, und zwar so, daß dieser dem Durchmesser der zu fräsenden Pfähle angepaßt ist. Da jedoch die Toleranzen in dieser Branche ziemlich groß sind, ist es möglich, daß nacheinander zu bearbeitende Pfähle verhältnismäßig große Durchmesserunterschiede aufweisen; als Beispiel sei hier angeführt: bei Pfählen mit einem Durchmesser von 10 cm bis zu 5 mm Durchmesserunterschied. Damit trotzdem in der Frässtrecke alle Pfähle ausreichend fest zwischen den gespannten Förder-und Niederhalteketten eingeklemmt werden, ist es vorteilhaft, den unteren Teil der Niederhaltekette durch eine Reihe aufeinanderfolgender individueller federnder Niederhaltemittel herabzudrüken, während der obere Teil der Förderkette inzwischen von einer langen Kufe starr gestützt wird. Eine zu straff gespannte Niederhaltekette könnte die Funktion der aufeinanderfolgenden individuellen federnden Niederhaltemittel hemmen. Es ist deshalb sinnvoll, den oberen Teil der Niederhaltekette mit einer federnden Längenausgleichseinrichtung zu versehen, die in der Kette eine geringere Vorspannung erzeugt, als die die die individuellen Niederhaltemittel auf den unteren Teil ausüben können. Vorzugsweise werden dafür pneumatisch bediente Kraftzylinder angewandt.

An Hand der folgenden Beschreibung der beigefügten Darstellungen von Vorzugsausführungsformen erfindungsgemäßer Einrichtungen, wird diese näher erläutert werden.

Abb. 1 zeigt schematisch in Seitenansicht eine erfindungsgemäße Einrichtung für - schrittweisen Betrieb, dargestellt im Querschnitt I-I von Abb. 2;

Abb. 2 zeigt schematisch eine Oberansicht des linken Teils, aus der Sicht der Bedienungsseite, der Einrichtung nach Abb. 1;

Abb. 3 zeigt einen mit Abb. 1 übereinstimmenden Querschnitt, jetzt jedoch im Betrieb in der Endlage des Vorschubhubs;

Abb. 4 zeigt schematisch eine Oberansicht einer Einrichtung nach Abb. 1, 2 und 3, mit einigen Einzelheiten des rechten Teils der Einrichtung;

Abb. 5a, 5b und 5c zeigen schematisch eine Oberansicht beziehungsweise eine Frontansicht und eine Queransicht einer für den kontinuierlichen Betrieb ausgelegten Einrichtung;

Abb. 6 zeigt einen Querschnitt der Abb. 5 nach der Linie VI-VI.

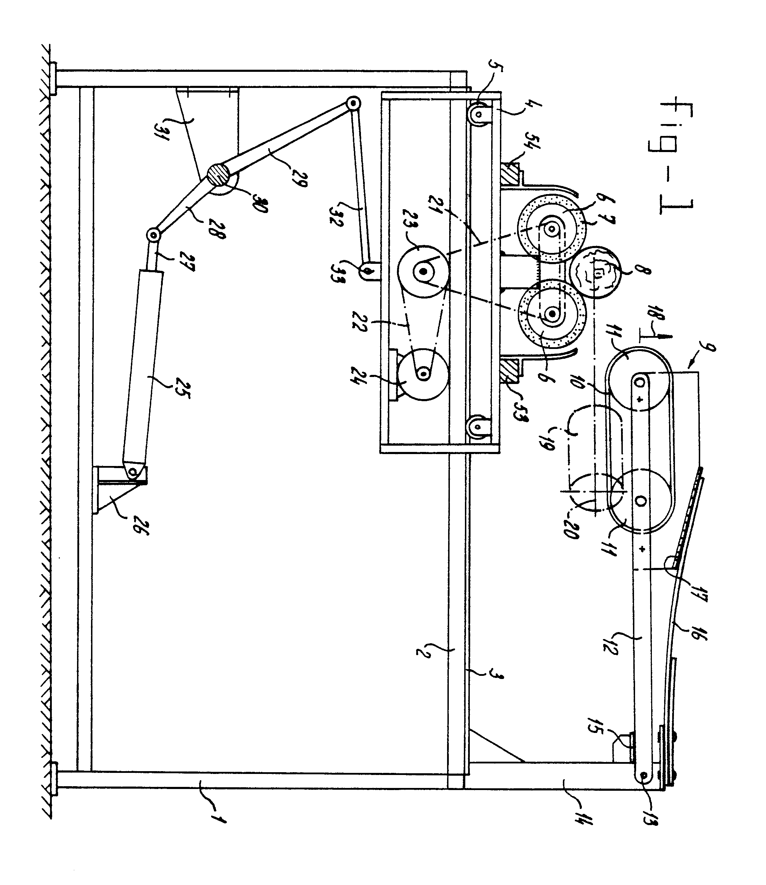

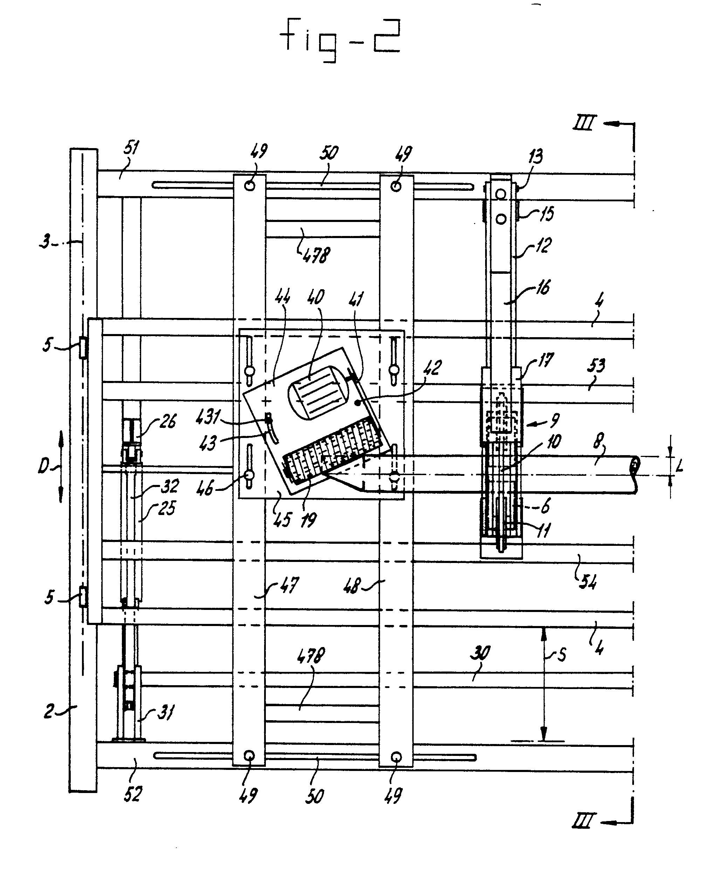

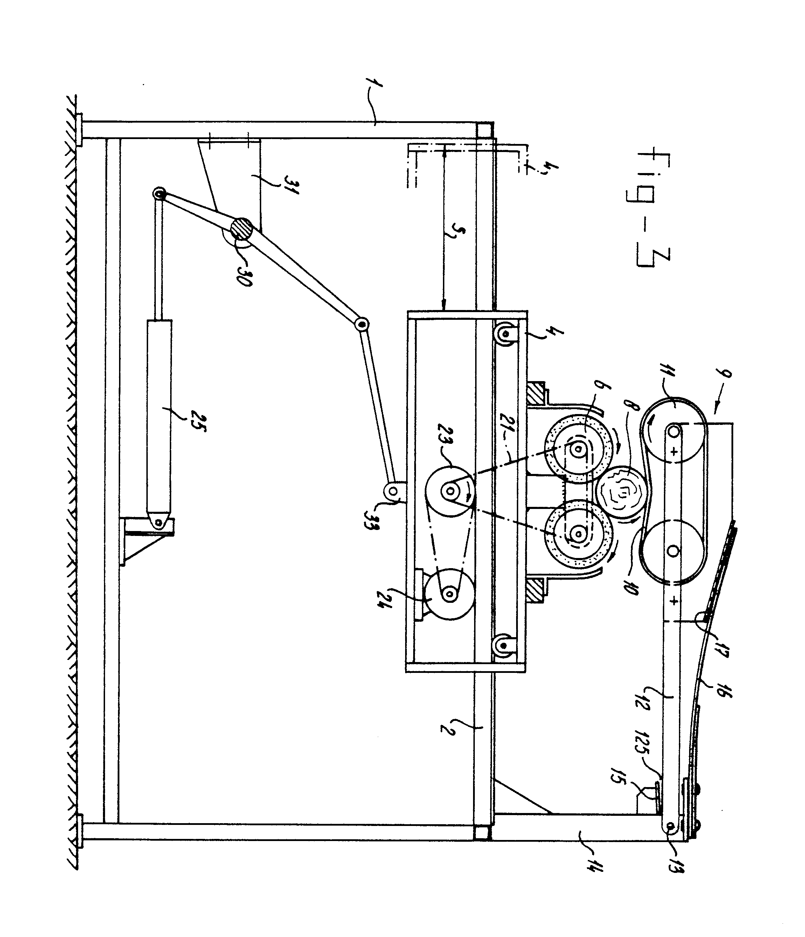

Unten werden die Abbildungen 1, 2 und 3 gleichzeitig besprochen. Es wird bemerkt, daß die Abbildungen alles nur schematisch und von der gesamten Einrichtung lediglich die zum guten Verständnis wesentlichen Teile darstellen. Die dargestellte Einrichtung ist zum schrittweisen Betrieb von der Bedienungseite aus bestimmt, welche in den Abbildungen 1 und 3 die linke Seite der Abbildungen und in Abbildung 2 die untere Seite ist.

Der Rahmen der gesamten Einrichtung ist mit 1 bezeichnet und umfaßt unter anderen zu beiden Querseiten an der Oberseite angebrachte solide waagerechte Balken 2. Auf diesen Balken sind - schematisch dargestellte Schienen oder Führungen 3 befestigt, die zur Führung eines Wagens 4 dienen, der mittels schematisch dargestellter Räder 5 auf dem Rahmen in Querrichtung auf den Schienen oder Führungen 3 hin und her bewegt werden kann. Auf dem Wagen sind zwei Stützrollen drehbar gelagert, deren Abstand voneinander auf nicht dargestellte Weise einstellbar ist. Die Stützrollen 6 befinden sich in einer senkrechten Ebene, senkrecht zur Längsrichtung der Einrichtung. Sie sind auf ihrem Umfang mit festen, die Reibung steigernden Verkleidungen 7 versehen, beispielsweise mit massiven Gummireifen. In die Einklemmung der Rollen wird ein zu bearbeitender Pfahl 8 gelegt. Dank der Einstellbarkeit des Abstands zwischen dem Stützrollenpaar kann bei Pfählen 8 mit unterschiedlichen Durchmessern die Höhe so eingestellt werden, daß die Achse des Pfahls 8 immer annähernd in derselben waagerechten Ebene liegen wird. Obwohl dies nicht dargestellt worden ist, ist es für den Fachmann selbstverständlich, daß zur guten Stützung des Pfahls wenigstens eine entsprechende Stützrollenkombination in der Nähe des anderen Endes der Einrichtung befindlich ist. Auch dieses Stützrollenpaar ist auf entsprechende Weise auf dem Wagen 4 befestigt. Für die Bearbeitung des Anspitzens des Pfahls 8 und des etwaigen Abkan tens soll der Pfahl 8 fest auf die Stützrollen 6 gepreßt werden, damit die Schneidkräfte, die von den weiter unten zu besprechenden Schneidvorrichtungen ausgeübt werden, den Pfahl weder fortschleudern, noch ins Schwingen versetzen können. Dazu ist auf dem Rahmen 1 eine Niederhaltevorrichtung 9 angebracht worden, und zwar jeweils eine Niederhaltevorrichtung 9 zur Zusammenarbeit mit einem Stützrollenpaar 6. Die Niederhaltevorrichtung 9 besteht aus einem straff gespannten Riemen, der um drehbar in Entfernung zueinander gelagerte Scheiben 11 gelegt worden ist. Die Lagerung der Scheiben 11 erfolgt auf bekannte Weise an einem Arm 12, der gelenkig bei 13 um eine waagerechte Achse parallel zur Längsrichtung der Einrichtung über eine Stütze 14 auf dem Rahmen 1 befestigt ist. Die Gelenkachse 13 befindet sich ungefähr in Höhe der Oberseite eines zu berabeitenden Pfahls 8. In der gezeichneten Position in Abb. 1, der Ruheposition, ruht der Arm 12 an einem auf nicht dargestellte Weise einstellbaren Anschlag 15. Aus der dargestellten Position kann die Niederhaltevorrichtung 9 somit - scharnierend nach oben drehen, wie durch Pfeil 18 angegeben und in Abb. 3 dargestellt ist. Mittels einer starken Blattfeder 16 wird die Niederhaltevorrichtung 9 über eine die Reibung verringernde Verkleidung 17, beispielsweise aus einem PTFE hergestellt, im Ruhezustand auf den Anschlag 15 herabgedrückt und im Betrieb (Abb. 3) auf einen zu bearbeitenden Pfahl 8. Schematisch ist in den Abbildungen 1 und 2 die Fräse 19 angegeben, die zum Anspitzen des Pfahls 8 bestimmt ist. Die Achse der Fräse 19 liegt annähernd in derselben Ebene, in der sich die Achse des Pfahls 8 bei der Querverstellung des Wagens 4 bewegt. Unten wird die Fräse 19 näher erläutert werden.

Die Stützrollen 6 jeden Paars werden synchron mit derselben Drehrichtung mittels beispeilsweise eines Kettengetriebes 21 von einer einstellbaren Spannrolle 23 aus angetrieben, welche Spannrolle 23 ihrerseits über ein Kettengetriebe 22 durch einen Motor 24 angetrieben wird. Letzterer ist mit der Spannrolle 23 auf dem Wagen 4 befestigt. Alle Stützrollenpaare der Einrichtung werden mit nicht näher angegebene bekannten Mitteln ständig synchron miteinander angetrieben. Dazu können die Antriebe zwischen den einzelnen Stützrollenpaaren mittels beispielsweise axial ein- und ausziehbarer Kardanwellen 231 miteinander gekoppelt sein, doch können die Antriebsmotoren auch elektrisch synchronisiert sein.

Den Querantrieb des Wagens 4 besorgt ein - schematisch dargestellter hydraulischer oder pneumatischer Kraftzylinder 25, der gelenkig an einem Stuhl 26 befestigt ist, der seinerseits auf einem der unteren Balken des Rahmens 1 angeordnet ist. Die ausgehende Stange 27 des Zylinders 25 ist gelenkig mit einem Hebel 28, 29 gekoppelt, der zwischen seinen Enden gelenkig an einem Stuhl 31 gelagert ist, der seinerseits ebenfalls am Rahmen 1 befestigt ist. Die gelenkige Lagerung des Hebels 28, 29 umfaßt eine Achse 30, die parallel zur Längsrichtung des Rahmens von einem Ende zum anderen Ende verläuft und nahe den Enden im Stuhl 31 gelagert ist. Bei ausreichend großer Torsionssteifigkeit der Achse 30 wird, ausgehend von einem einzigen Kraftzylinder 25, der Wagen 4 nahe seinen beiden Enden in genau gleicher Weise angetrieben werden. An seinem freien Ende ist der Hebel 29 wieder gelenkig über eine Stange 32 mit einer Kupplung 33 des Wagens 4 verbunden. Bedienung des Kraftzylinders 25, der in den Abbildungen doppeltwirkend ist, jedoch auch einfachwirkend sein kann, in welchem letzteren Falle er mit einer Rückstellfeder versehen sein soll, sorgt für die Querverstellung des Wagens 4. Dieser ist in Abb. 1 in der Extremlage an der Bedienungsseite der gesamten Einrichtung dargestellt, wo bearbeitete Pfähle 8 entfernt und neue eingelegt werden. Von der in Abb. 1 dargestellten Beschickungs-und Entladeposition des Wagens 4 wird dieser infolge der Verlängerung des Kraftzylinders 25, 27 in den Abbildungen nach rechts verstellt, wobei sich der zu bearbeitende Pfahl 8 zunächst der Niederhaltevorrichtung 9 und danach der Fräse 19 nähert. Um die Zyklusdauer möglichst zu beschränken, ist es erwünscht, die Querverstellung anfangs schnell stattfinden zu lassen, bis zu dem Zeitpunkt, an dem die Niederhaltevorrichtung 9 den Pfahl 8 festgreift. Weil kurz danach die Fräsbearbeitung beginnt, soll auf dieser Strecke der Querverstellung die Vorschubgeschwindigkeit beträchtlich abnehmen, um die Fräsbearbeitung mit einer annähernd konstanten niedrigen Vor schubgeschwindigkeit durchzuführen. Dazu kann bei kontinuierlicher Speisung des Zylinders 25 mit Druckmittel, das Gestänge in der dargestellten Weise ausgeführt sein. In Abb. 1 ist der Winkel zwischen dem Hebel 29 und der Pleuelstange 32 spitz und durchläuft den 90°-Bereich, so daß bei konstanter Verlängerung des Zylinders 25 eine hohe Vorschubgeschwindigkeit auftritt. Kommt der Wagen in den Bearbeitungsbereich L (Abb. 2), dann hat die Vorschubgeschwindigkeit beträchtlich abgenommen, da der Winkel zwischen dem Hebelarm 29 und der Stange 32 immer weiter gestreckt wird. Dadurch nimmt nicht nur die Vorschubgeschwindigkeit beträchtlich ab, wie dies erwünscht ist, sondern nimmt ebenfalls die von dem Zylinder ausgeübte Vorschubkraft beachtlich zu. Weil, wie in den Abbildungen 1 und 2 dargestellt, sich die Fräse 19 ungefähr in derselben Ebene befindet, in der der Pfahl 8 in Querrichtung verstellt wird, ist die Bearbeitungsstrecke L nur kurz im Vergleich zu der gesamten Querverstellung S, wie in Abb. 3 wiedergegeben. Es wird deutlich sein, daß beide Endlagen genauestens bestimmt sein müssen, um in der Beschickungs-und Entladestellung nach Abb. 1 den Wagen rechtzeitig abzubremsen und am Ende der Bearbeitungsstrecke L nach der vollständigen Bearbeitung der Spitze 9 nicht noch mehr Material unnötigerweise vom Pfahl abzufräsen. Dazu können nicht-dargestellte Mittel wie beispielsweise Grenzschalter angewandt werden, die die Betätigung des Kraftzylinders steuern. Zur Sicherung können ausserdem nicht-dargestellte einigermaßen federnde Notstoppanschläge vorgesehen sein. Ein nicht-dargestellter (hydraulischer) Dämpfer kann die Vorschubbewegung auf der Frässtrecke weiter stabilisieren.

Wie aus dem Vorstehenden hervorgeht, wird der Pfahl 8 auf seinen Stützrollen 6 durch den Antrieb 21-24 rotiert, und dieser nimmt die freigelagerten Niederhalterollen 11 und den Riemen 10 bei ihrer Rotation mit. Zur gedanklichen Vorstellung kann gesetzt werden, daß bei üblichen Fichtenholzpfählen mit etwa 10 cm Durchmesser die Frässtrecke in etwa 2 Sekunden zurückgelegt wird und der Pfahl 8 dabei etwa 10 Umdrehungen macht.

Weiter wird klar sein, daß die Rotation des Pfahls 8 im Beschickungs-und Entladezustand nach Abb. 1 aufgehört haben muß, um der Bedienungsperson die Beschickung und Entladung zu erleichtern und sicherer zu machen. Mittels nichtdargestellter jedoch an sich bekannter Mittel, beispielsweise bedienbarer Schalter beim Passieren des Wagens 4 oder mittels einer Steuerung von außen, wird der Motor 24 nur in der Bearbeitungsstrecke L und kurz davor sowie kurz danach betätigt werden. Wenn der Wagen 4 in der Beschickungs-und Entladestellung stillsteht, soll der Antrieb 24 in jedem Fall gestoppt sein.

Für den Fachmann ist es selbstverständlich, daß an Stelle einer Bedienung mit dem beschriebenen Kraftzylinder 25 viele andere Antriebe möglich sind, beispielsweise mit Gewindespindeln und ähnlichen. Deren Bewegungszyklus soll jedoch im wesentlichen wie oben beschrieben verlaufen.

In Abbildung 3 ist, wie sich schon aus dem vorigen ergibt, der Pfahl 8 an das Ende der Frässtrecke L geraten und mit einer Spitze versehen. Die Niederhaltevorrichtung 9 ist dabei um einen kleinen Winkel nach oben um Gelenkachse 13 gekippt und wird dabei mit zunehmender Kraft mittels der Blattfeder 16 an den Pfahl gedrückt. Dadurch ist der Arm 12 vom Anschlag 15 freigekommen, wie dies durch Pfeil 125 angegeben worden ist.

In Abbildung 2 sind weitere Einzelheiten, sofern von Bedeutung, schematisch wiedergegeben. Der Rahmen 1 trägt an seiner Oberseite einen Längsträger 51 an der Rückseite und einen Längsträger 52 an der Bedienungsseite. Darauf einstellbar befestigt ist ein Querrahmen 47, 48, 478 zur Stützung der Fräse 19 und ihres Antriebs. Dieser Fräsrahmen ist etwas erhöht, so daß der Wagen 4 darunter frei hin-und herbeweglich ist. Er ist jedoch zugleich von geringer Höhe, so daß die Fräse 19 in der gewünschten Höhe liegt, und der Pfahl 8 frei auf dem Fräsrahmen hin und her bewegt werden kann. Zur Längeneinstellung des zu fräsenden Pfahls ist der Fräsrahmen in Längsrichtung einstellbar auf dem Hauptrahmen 1. Dazu sind in den waagerechten Balken 51 und 52 Schlitze 50 angebracht worden, in denen mit - schematisch wiedergegebenen, bequem zu bedienenden Befestigungsmitteln 49 der Fräsrahmen befestigt werden kann. Die Fräse 19 ist zusammen mit ihrem Antriebsmotor 40 und ihrem Getriebe 41 auf bekannte, nicht-dargestellte Weise solide drehbar auf einem Drehtisch 44 gelagert. Der Drehtisch 44 ist schwenkbar um Achse 42 und kann in unterschiedlichen Winkelpositionen gegenüber dem Fräsrahmen mittels eines Schlitzes 43 und eines dadurch hindurchsteckenden Befestigungsmittels 431, beispielsweise Bolzen und Klemmutter, festgesetzt werden. Mittels dieser Einstellbarkeit wird die Rotationsachse der Fräse gegenüber der Achse des Pfahls eingestellt, so daß der Scheitelwinkel der zu bearbeitenden Spitze des Pfahls eingestellt werden kann. Die Drehplatte 44 wird ihrerseits von einer Platte 45 gestützt, die mittels Schlitzen 46 und zugehörigen Befestigungsmitteln einstellbar auf dem Fräsrahmen 47, 48, 478 befestigt ist. Letztere Einstellmöglichkeit 46 dient vor allem dazu, die Fräse optimal einstellen zu können, wenn Pfähle mit großen Durchmesserunterschied angespitzt werden müssen. Zugleich kann damit ein unterschiedlicher Fräsdurchmesser ausgeglichen werden, der beispielsweise eine Folge des Nachschleifens sein kann.

Weiter sind in Abb. 2 die Längsbalken 53 und 54 des Wagens 4 klar zu erkennen, auf denen die Stützrollen 6 mit ihrer Stützung befestigt sind.

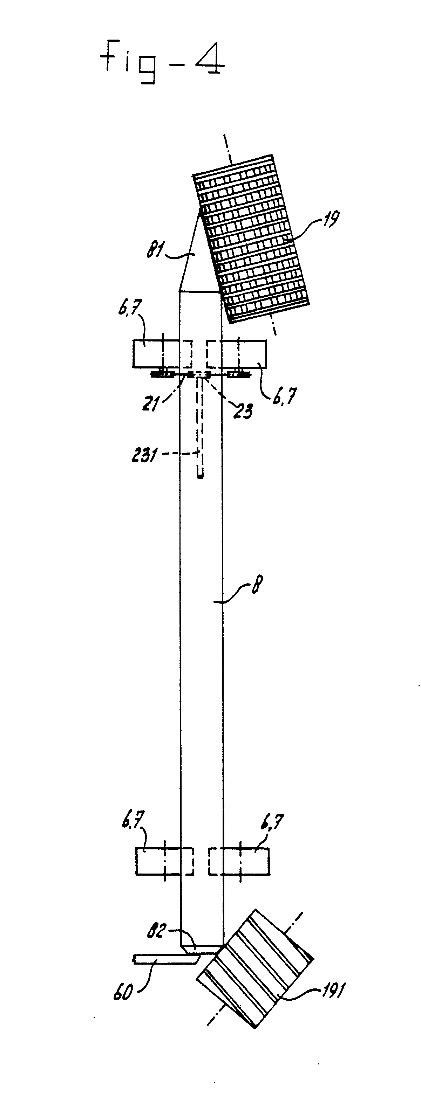

Obwohl nicht dargestellt, kann es unter Umständen erwünscht sein, die oben beschriebene schrittweise funktionierende Einrichtung so auszuführen, daß sowohl die Seite 52 wie die Seite 51 beide Beschickungs-und Entladeseiten sind, oder aber daß die eine Seite ausschließlich Beschickungs-und die andere Seite ausschließlich Entladeseite ist. In dem Falle wird die Fräse 19 über der Verstellungsebene der Pfähle 8 liegen müssen, damit die Pfähle darunter hindurch verstellt und inzwischen angespitzt und abgekantet werden können. Die Bedienungseinrichtung des Wagens 4 wird dem selbstverständlich angepaßt werden müssen, während die Stützung 14 der Niederhaltevorrichtung 9 in der Weise geändert werden muß, daß sie an dieser Seite der Einrichtung das Beschicken und Entladen nicht hemmt. Die dabei erforderliche Position der Fräse 19 wird unten an Hand der Abbildungen 4, 5 und 6 näher erläutert.

Abb. 4 zeigt schematisch eine Oberansicht der an Hand der Abbildungen 1, 2 und 3 beschriebenen Einrichtung. Der Pfahl 8 stützt sich auf die beschriebene Weise auf den Stützrollenpaaren 6, 7. Jedes Paar ist in der Nähe eines zu fräsenden Endes des Pfahls angeordnet. In dieser Abbildung ist die schon beschriebene Fräse 19 zur Herstellung der Spitze 9 dargestellt. Außerdem ist die Fräse 191 zum Anbringen der Abkantung 82 am anderen Ende des Pfahls dargestellt. Diese Fräse 191 ist so angeordnet, daß eine Abkantung 82 mit dem üblichen Winkel von etwa 45°-60° zur Achse des Pfahls mit nur geringer Materialabspanung hergestellt werden kann. Um alle Pfähle genau gleich lang zu machen, ist es vorteilhaft, einen Anschlagsbalken 60 anzuwenden, der sich parallel zur Querverstellungsrichtung des Wagens 4 erstreckt und an den die Pfähle beim Beschicken angelegt werden und an dem sie während ihrer vollständigen Vorschubbewegung liegen bleiben. Es ist ja immerhin möglich, daß durch die relativ großen Kräfte , die von der Fräse 19 beim in kurzer Zeit Anspitzen des Pfahls ausgeübt werden, auf diesen eine axiale Kraft ausgeübt wird, die den Pfahl in eine Richtung von der Fräse 19 weg zu verschieben versuchen würde. Dadurch wird das abzukantende Ende des Pfahls immer sicher an dem Anschlagsbalken 60 ruhen.

Es wird klar sein, daß die Fräse 191 auch durch eine Spitzfräse ersetzt werden könnte, um Pfähle mit zwei Spitzen herzustellen, oder andersherum, könnte die Fräse 19 durch eine Abkantfräse 119 ausgewechselt werden oder aber in eine Position versetzt werden, um ebenfalls abzukanten.

Es ist mit der beschriebenen Einrichtung ebenfalls möglich, aus langen Pfählen zwei kurze Pfähle zu machen. In dem Falle wird zu beiden Pfahlenden eine Spitze gefräst werden und wird in oder nahe der Mitte eine dritte Fräseinheit auf dem Rahmen 1 angebracht werden müssen, die zum zweiseitigen Abkanten und Durchsägen geeignet ist. In Ausnahmefällen könnte auch dort angespitzt werden. Zur Stützung der zwei erhaltenen kurzen Pfähle sollen, wie dem Fachmann klar sein wird, entsprechende Stützrollenpaare 6, 7 und Niederhaltevorrichtungen 9 zu beiden Seiten der dritten Fräs-Säge-Einheit auf dem Wagen angebracht werden. Es wird auch klar sein, daß in einer Anzahl der oben beschriebenen besonderen Anwendungen der Einrichtung der Anschlagsbalken 60 entfernt sein muß.

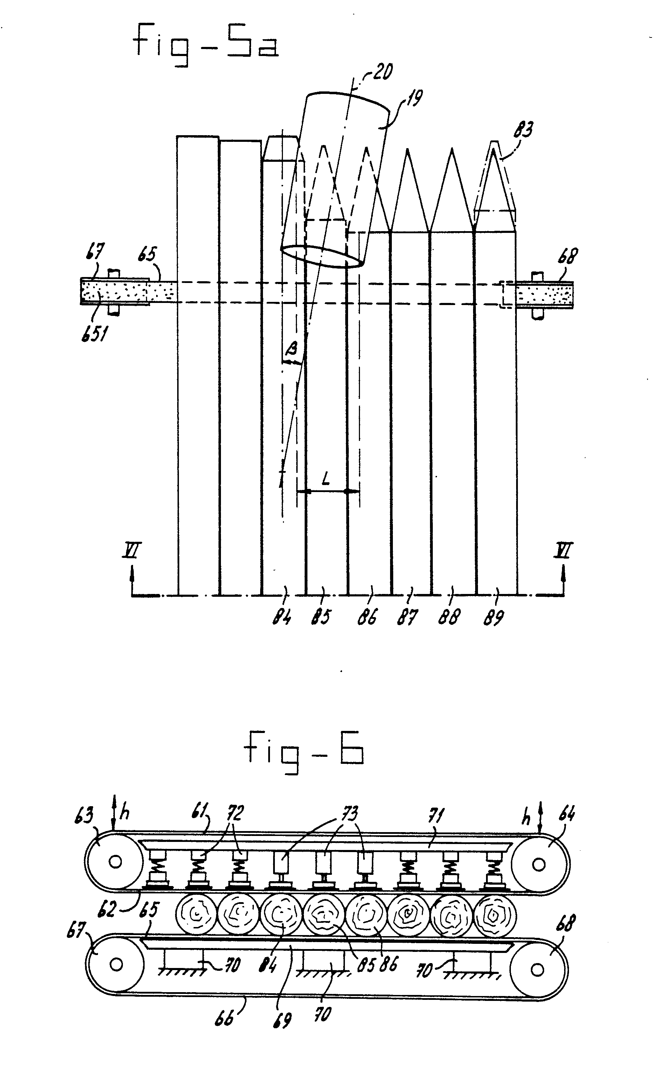

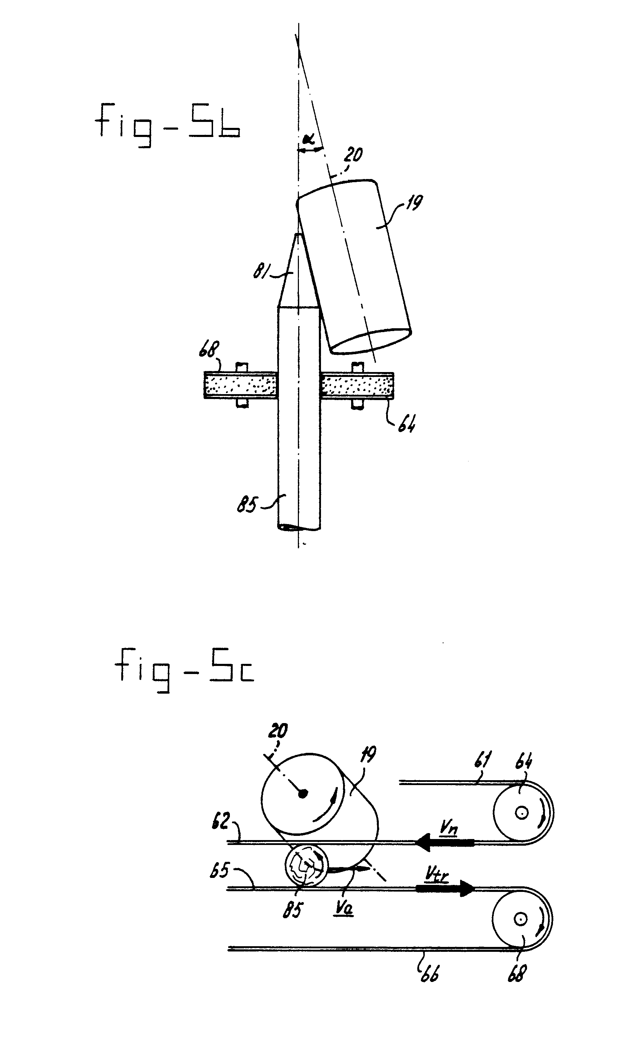

In den Abbildungen 5 und 6 ist schematisch die oben beschriebene Einrichtung dahingehend geändert worden, daß sie zum kontinuierlichen Anspitzen und/oder Abkanten von Pfählen geeignet ist. Es wird eine Querförderanlage für kontinuierlichen Betrieb der Anspitz-und/oder Abkanteinrichtung von Pfählen dargestellt. Alles was nachfolgend nicht besonders umschrieben worden ist, stimmt mit der obigen Beschreibung der schrittweise funktionierenden Einrichtung überein. Die Funktion ist grundsätzlich dieselbe: Die Pfähle werden in Querrichtung zugeführt und unter der Fräse (den Fräsen) hindurchtransportiert, damit eine Spitze und/oder eine Abkantung angebracht wird. Auch hier sind die Abbildungen stark schematisiert. Obwohl lediglich die Fräse zum Anspitzen angegeben worden ist, wird klar sein, daß eine ähnliche Fräse am anderen Pfahlende zum Abkanten angewandt werden kann, oder in Ausnahmefällen zum zweiseitigen Anspitzen.

Die Querförderanlage besteht nun aus wenigstens zwei endlosen gespannten Förderketten, die in der senkrechten Ebene parallel zueinander und senkrecht zur Achse der Pfähle mittels Umleitungsrädern 67, 68 auf dem Rahmen auf bekannte Weise gelagert sind. Von den Förderketten ist nur die Kette 65, 66 an der Seite der Spitzfräse 19 dargestellt worden. Der obere Teil 65 wird dabei auf voller Länge von einer Kufe 69 gestützt, die durch geeignete Stützen 70 fest auf dem Rahmen gestützt ist. Parallel dazu ist die Niederhaltekette 61, 62 um Umleitungsrollen 63 und 64 gespannt. Dazwischen wird die Serie kontinuierlich zu bearbeitender Pfähle 84-89 eingeklemmt und bewegt. In Abb. 5c ist schematisch das Bewegungssystem angegeben, auf das unten näher zurückgekommen wird. Im Blick auf eine bequeme Erreichbarkeit zum Auswechseln und/oder Schleifen der Fräse 19 ist diese im wesentlichen oberhalb der Pahlbahn angeordnet. Einfachheitshalber sind in den Zeichnungen die Lagerung und der Antrieb ausgelassen, stimmen sie doch grundsätzlich mit den zu den Abbildungen 1-3 Beschriebenen überein. Die Rotationsachse 20 der Fräse 19 steht in jedem Fall in einem Winkel α nach Abb. 5b zur Achse der Pfähle, damit eine Spitze 81 an den Pfählen gefräst wird. Die Fräse kann erforderlichenfalls höher gegenüber der Pfahllänge eingestellt werden, um die mit Punktlinie angegebene stumpfe Spitze 83 zu bekommen, die vorteilhaft sein kann, wenn die Pfähle in steinigen Boden oder dergleichen eingeschlagen werden müssen. Mit der Einstellung des Winkels α wird der Scheitelwinkel der Pfahlspitze eingestellt. In Abb. 5a ist zu sehen, daß die Achse 20 der Fräse ebenfalls einen Winkel β zur Achse der Pfähle haben kann, um die wirksame Frässtrecke L auf mehrere Pfähle gleichzeitig zu verteilen, so daß die auf den Pfahl ausgeübten Fräskräfte kleiner, die Fräsbelastung konstanter und die Schnittrichtung mehr mit dem Faserverlauf mitgehen werden. Die in den Abbildungen dargestellte Frässtrecke stimmt mit L überein. Die Pfähle 84, 85 und 86 werden somit in dieser Momentaufnahme der Fräsbearbeitung unterzogen und sollen deswegen ausreichend fest zwischen Förderband und Niederhalteband eingeklemmt sein. Zuallererst sind die Bänder an ihrer tragenden Seite mit feinen scharfen Zacken oder ähnlichen versehen, wie - schematisch mit 651 angegeben, um ohne nennenswerte Beschädigung der Pfahloberfläche die Pfähle trotzdem rutschfest festzugreifen. Wie schon vorher zu den Abbildungen 1, 2 und 3 erwähnt, drehen sich die Pfähle um ihre eigene Achse während ihrer Vorschubbwegung unter der Fräse hindurch. Dazu wird nach Abb. 5c der obere Teil 65 des Förderbands mit einer linearen Geschwindigkeit $|V_{tr}|$ angetrieben, während der untere Teil 62 des Niederhaltebands in entgegengesetzter Richtung mit einer geringeren Geschwindigkeit $|V_n|$ bewegt. Die Umfangsgeschwindigkeit, mit der der Pfahl rotiert, stimmt annäherungsweise mit $|V_{tr}|$ überein, jedoch mit der Vorschubrichtung entgegengesetzter Richtung. Die Vorschubgeschwindigkeit $|V_a|$ ist gering und beträgt:

$$\frac{|V_{tr}| - |V_n|}{2}$$

Zum Fräsen des durchschnittlichen Fichtenholzpfahls macht jeder Pfahl etwa 10 Umdrehungen auf der Frässtrecke L und legt diese Strecke in etwa 2 Sekunden zurück. Aus Obigem ergibt sich, daß das zusammenarbeitende Förder-und Niederhalteband individuell mit derselben Drehrichtung für die Umleitungsrollen 63, 64 und 67, 68 angetrieben werden, jedoch mit etwas unterschiedlichem Wert, um eine resultierende Vorschubgeschwindigkeit $|V_a|$ in der korrekten Richtung zu erhalten. Dazu muß $|V_{tr}|$ etwas größer als die entgegengerichtete $|V_n|$ sein. In der Zufuhrbahn und der Abfuhrbahn der Pfähle reicht es aus, wenn die Pfähle zwischen den Ketten mit verhältnismäßig geringer Kraft angedrückt werden, weil auf die Pfähle, abgesehen von der gegenseitigen Reibung, weiter keine nennenswerten Kräfte einwirken. Federnde Gleitschuhe, schematisch mit 72 angegeben, sind dazu geeignet. Sie stützen auf einem schematisch mit 71 angegebenen Rahmenteil mit ausreichender Festigkeit, der mit dem gesamten Niederhalteband höhenverstellbar ist, wie schematisch mit h angegeben ist. Auf der Frässtrecke L aber sollen die Pfähle, in diesem Falle 84, 85 und 86 individuell, fest angedrückt werden. Dazu können hydraulisch oder pneumatisch betätigte Kraftzylinder 73 angewandt werden, die eine so große Niederhaltekraft ausüben, daß sie die Vorspannung der Niederhaltekette überwinden können. In dieser Weise sind nebeneinander liegende Pfähle unterschiedlicher Dicke jeweils zuverlässig beim Fräsvorgang zu beherrschen, sowohl hinsichtlich ihrer Eigenrotation wie auch hinsichtlich ihres Vorschubs.

Es wird dem Fachmann klar sein, daß eine Anzahl der beweglichen Teile im Blick auf eine zuverlässige und langlebige Funktion mit bekannten Mitteln und auf bekannte Weise gegen Späne geschützt und staubdicht abgeschirmt sind, welche Mittel jedoch im Blick auf die Einfachheit und Deutlichkeit der Zeichnungen nicht dargestellt worden sind. Weiter ist es im Zusammenhang mit der relativ hohen Produktionsgeschwindigkeit erwünscht, daß die Fräsen kleine Zacken mit viel zwischengelegenem Spanraum haben, und daß die Zacken auf einer Schraubenlinie mit geringer Gewindesteigung angebracht sind, damit keine Bahnen in der verarbeiteten Pfahloberfläche zurückbleiben und die Fräsen nicht leicht verstopfen können. Kleine Späne lösen sich außerdem leichter und sind meistens sofort für Verarbeitung zu Spanplatten geeignet. Im Blick auf die leichte Herstellung und das bequeme Schleifen der Fräsen ist es vorteilhaft, zylindrische Fräsen anzuwenden, wie dargestellt. Fräsen mit langen Schneiden, die Hobelspäne bilden, sind weniger geeignet, mit wegen ihrer größeren Empfindlichkeit gegen z.B. Knorren im Holz. Dem Fachmann wird weiter deutlich sein, daß eine korrekte rechtwinklige Zufuhr der Pfähle zu der Förderkette erforderlich ist, dazu sind aber verschiedene bekannte Einrichtungen zu verwenden, die deswegen nicht beschrieben und dargestellt zu werden brauchen. Auf der schon beschriebenen Weise entsprechende Weise kann auch die kontinuierliche Einrichtung dafür ausgelegt werden, aus längeren Pfählen zwei kürzere zu machen.

**Ansprüche**

1. Einrichtung zum Anspitzen und/oder Abkanten runder Pfähle, dadurch <u>gekennzeichnet</u>, daß die Einrichtung umfaßt:
-einen länglichen Rahmen (1, 2, 51, 52),
-wenigstens eine darauf angeordnete Querförderanlage (4; 62, 65), die dafür ausgelegt ist, einem oder mehreren in Längsrichtung darauf mitgenommenen Pfählen (8) sowohl eine Vorschubverstellung in Querrichtung gegenüber dem länglichen Rahmen wie auch eine Rotation um seine/ihre Achse zu geben,
-wenigstens eine auf dem Rahmen befestigte rotierend angetriebene Fräse (19), deren Rotationsachse (20) in einem Winkel zur Richtung der Achse eines Pfahls steht, wenn dieser durch die Querförderanlage in den Arbeitsbereich (L) der Fräse gebracht worden ist, welcher Winkel eine Komponente sowohl gegenüber der waagerechten (α) wie gegenüber der senkrechten Ebene (β) haben kann, wobei der wirksame Bereich der Schnittfläche der Fräse höhenverstellbar gegenüber der Ebene ist, in der die Querverstellung des Pfahls stattfindet, und wobei die Position der Fräse (der Fräsen) in Längsrichtung des Rahmens zur Anpassung an die Pfahllänge einstellbar ist.

2. Einrichtung nach Anspruch 1, dadurch <u>gekennzeichnet</u>, daß sich in der Nähe jeden Endes des Rahmens eine rotierende Fräse (19, 191) befindet, deren Winkel und eventuell auch Höhe individuell gegenüber dem zu bearbeitenden Pfahl einstellbar sind, so daß der Pfahl entweder an einem oder an beiden Enden angespitzt (81) oder abgekantet (82) oder aber an einem Ende angespitzt und am anderen Ende abgekantet werden kann.

3. Einrichtung nach Anspruch 2, dadurch <u>gekennzeichnet</u>, daß, namentlich für kurze Pfähle, zwischen den beiden Fräsen nahe dem Ende des Rahmens, eine dritte rotierende Säge-Fräs-Einheit angeordnet ist, um zwischen den Enden des Pfahls diesen entweder abzukanten und durchzusägen, oder aber ihn anzuspitzen und erforderlichenfalls durchzusägen, so daß zwei kurze, vollverarbeitete Pfähle entstehen.

4. Einrichtung nach einem der vorigen Ansprüche, dadurch <u>gekennzeichnet</u>, daß die Fräse (19, 191) zylindrisch und länger als die zu bearbeitende Spitze (81; 83) des Pfahls ist, so daß Pfähle unterschiedlicher Länge alle bearbeitungsfähig bleiben und gleich lang werden, wobei das andere Ende des Pfahls an einem einstellbaren Anschlag (60) bei seiner Querverstellung entlang geführt wird und wobei die Zylinderfläche der Fräse die Achse sowohl des dicksten wie des dünnsten bearbeitungsfähigen Pfahls schneidet (Abb. 5b).

5. Einrichtung nach Anspruch 4, dadurch <u>gekennzeichnet</u>, daß die Schnittflächen der Fräse aus einer Reihe einzelner Meißel bestehen, die auf einer zylindrischen Schraubenlinie mit geringer Gewindesteigung und in weitem Abstand zueinander gelegen sind, um viel Spanraum zu bilden.

6. Einrichtung nach einem oder mehreren der vorigen Ansprüche, geeignet für schrittweise Bearbeitung von Pfahl um Pfahl, dadurch <u>gekennzeichnet</u>, daß die Querförderanlage einen in Querrichtung im Rahmen geführten Wagen (4) umfaßt, mit Antriebsvorrichtungen (25-33), ausgelegt für einen schnellen Zufuhrhub, gefolgt von einem langsamen Vorschub über die Bearbeitungsstrecke (L) und einem schnellen Rückhub über den gesamten Hub der Querverstellung.

7. Einrichtung nach Anspruch 6, dadurch <u>gekennzeichnet</u>, daß auf dem Wagen (4) wenigstens zwei synchron rotierend angetriebene Stützrollenpaare (6, 7) zur rotierenden Stützung des Pfahls (8) angeordnet sind, jedes Paar in der Nähe einer Fräse am Ende des Rahmens, wobei der Abstand der Stützrollen jeden Paars zueinander als Funktion der Dicke des zu bearbeitenden Pfahls einstellbar ist, und wobei alle Rollen in derselben Richtung synchron mittels eines Kettengetriebes (21-24) oder dergleichen in jedem Paar und einer axial ausziehbaren Kardanwelle (231) (Abb. 4) oder dergleichen zwischen den Paaren angetrieben werden.

8. Einrichtung nach den Ansprüchen 6 oder 7, dadurch <u>gekennzeichnet</u>, daß auf dem Rahmen senkrecht über jedem Stützrollenpaar eine stationäre Niederhaltevorrichtung (9) angebracht ist, die nur den Bereich (L) der Querbewegung, auf dem der Pfahl gefräst wird, bestreicht, welche Niederhaltevorrichtung je zwei freidrehend gelagerte Scheiben (11) mit der Rotationsachse parallel zur Pfahlachse umfaßt, und welche beide in der senkrechten Ebene durch das zugehörige Stützrollenpaar gelegen sind, und wobei die Achsen der Niederhaltescheiben wenigstens in einem mit der Frässtrecke übereinstimenden Abstand voneinander entfernt sind und über die beiden Scheiben jeden Paars ein Riemen (10), beispielsweise ein Keilriemen, straff gespannt ist, wobei jede Niederhaltevorrichtung um eine waagerechte Achse (13) parallel zur Achse des Pfahls in Abstand von der Frässtrecke (L) und ungefähr in Höhe des Pfahls gelenkig an dem Rahmen befestigt ist und durch eine federnde Niederhaltevorrichtung (16) auf einen einstellbaren Anschlag (15) herabgedrückt wird, wobei der Abstand im Ruhezustand zwischen der Oberseite der Stützrollen (6, 7) und der Unterseite der Niederhaltescheiben (11) etwas geringer ist als die Dicke des Pfahls,

dies alles in der Weise, daß ein auf die Stützrollen gelegter Pfahl mitrotiert und rotierend durch den Quervorschub des Wagens (4) gegen die Einlaufkante der Unterseite des umspannenden Riemens (19) stößt und sich dieser daraufhin federnd nach oben scharnierend dreht, wobei der rotierende Pfahl den frei rotierenden Riemen (10) mitrotieren läßt, wodurch eine feste Einschließung und rotierender Antrieb des Pfahls während des gesamten Fräsvorgangs auf der Frässtrecke (L) gewährleistet sind.

9. Einrichtung nach Anspruch 3, 6, 7 und 8, dadurch gekennzeichnet, daß es zu beiden Seiten der dritten Säge-Fräs-Einheit entsprechende Stützrollenpaare und zugehörige Niederhaltevorrichtungen gibt.

10. Einrichtung nach den Ansprüchen 1-5, geeignet für die kontinuierliche Bearbeitung einer Reihe übereinstimmender Pfähle, dadurch gekennzeichnet, daß der wirksame Bereich der schneidenden Fläche jeder Fräse vorzugsweise über (oder eventuell unter) der Ebene, in der die Querverstellung dieses Pfahls erfolgt, gelegen ist, daß die Querförderanlage aus wenigstens zwei endlosen, gespannten Förderketten (65, 66) oder dergleichen besteht, die in der senkrechten Ebene parallel zueinander und senkrecht auf der Achse der Pfähle mit Umleitungsrädern (67, 68) auf dem Rahen (1, 51) gelagert und synchron anzutreiben sind, wobei der obere Teil (65) im Betrieb die Pfähle trägt, und daß über jeder Förderkette (65) in derselben senkrechten Ebene eine endlose gespannte Niederhaltekette (61, 62) angebracht ist, die höhenverstellbar auf dem Rahmen mit Umleitungsrädern (63, 64) gelagert ist und mit ihrem unteren Teil (62) die Pfähle herabdrückt und dabei parallel zu dem oberen Teil (65) der zugehörigen Förderkette verläuft, und wobei beide Niederhalteketten synchron angetrieben werden können.

11. Einrichtung nach Anspruch 10, dadurch gekennzeichnet, daß im Betrieb der obere Teil (65) jeder Förderkette mit einer Geschwindigkeit $|V_{tr}|$ in Vorschubrichtung bewegt und der untere Teil (62) jeder Niederhaltekette mit einer Geschwindigkeit $|V_n|$ entgegen der Vorschubrichtung bewegt, dies alles in der Weise, daß jeder zwischen den Ketten eingeklemmter Pfahl (84-89) um seine Achse mit einer Umfangsgeschwindigkeit $|V_{tr}|$ entgegen der Vorschubrichtung rotiert und zugleich eine Vorschubgeschwindigkeit

$$|V_a| = \frac{|V_{tr}| - |V_n|}{2},$$

hat, wobei $|V_{tr}| > |V_n|$.

12. Einrichtung nach Anspruch 10 oder 11, dadurch gekennzeichnet, daß auf der Frässtrecke (L) jeder Pfahl etwa 10 Umdrehungen macht.

13. Einrichtung nach den Ansprüchen 9-12, dadurch gekennzeichnet, daß wenigstens im Bereich der Frässtrecke (L) der untere Teil (62) der Niederhaltekette durch eine Reihe aufeinanderfolgender individueller federnder Niederhaltemittel (72, 73) auf die Pfähle gedrückt werden kann, wie pneumatisch bediente Kraftzylinder (73), die auf Niederhaltekufen oder -rollen wirken, während der obere Teil der Förderkette (65) von einer langen Kufe (69) starr gestützt wird, dies alles um trotz Toleranzen hinsichtlich der Dicke der einzelnen Pfähle (84-89) einer Serie jeden Pfahl jederzeit festfesthalten und befördern zu können.

fig-1

0 226 237

# Fig-2

Fig-2

Fig-4

## Fig-5a

## Fig-6

fig-5b

fig-5c

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-2 766 785 (JOYAL)<br>* Anspruch 2 * | 1 | B 27 M 3/32<br>B 23 Q 7/03 |
| Y | | 3-5 | |
| | --- | | |
| X | US-A-1 993 064 (LE BLANC)<br>* Anspruch 1 * | 1,6 | |
| | --- | | |
| X | US-A-1 955 437 (OESER)<br>* Seite 1, Zeilen 80-110; Figur 7 * | 1,7 | |
| Y | | 8 | |
| | --- | | |
| X | US-A-4 048 761 (COTTRELL)<br><br>* Anspruch 1a * | 1,10, 11 | RECHERCHIERTE SACHGEBIETE (Int. Cl.4)<br><br>B 27 M |
| | --- | | B 27 L |
| X | DE-A-2 121 943 (BRUNOTTE)<br>* Anspruch 7 * | 1,13 | B 27 C<br>B 23 Q<br>B 24 B |
| Y | <br>* Anspruch 18 * | 2 | |
| A | | 4,10 | |
| | --- -/- | | |

Der vorliegende Recherchenbericht wurde für alle Patentansprüche erstellt.

| Recherchenort | Abschlußdatum der Recherche | Prüfer |
|---|---|---|
| DEN HAAG | 11-03-1987 | DE GUSSEM J.L. |

## Europäisches Patentamt

# EUROPÄISCHER RECHERCHENBERICHT

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | GB-A- 550 902 (TUBES)<br>* Anspruch 2 *<br>--- | 2 | |
| Y | FR-A-2 541 618 (HOMBAK)<br>* Anspruch 20; Figuren 4-7 *<br>--- | 3 | |
| Y | NL-C- 123 244 (BÖHLER)<br>* Spalte 3, Zeilen 10-14; Figur 3 *<br>--- | 4 | |
| Y | US-A-2 840 127 (STOKES)<br>* Spalte 1, Zeilen 37-39; Figur 3 *<br>--- | 5 | |
| Y | US-A-4 363 342 (TANNERSTAL)<br>* Spalte 4, Zeilen 12-47; Figur 3 *<br>--- | 8 | |
| A | US-A-3 451 449 (BOUMA)<br>--- | 1,2 | RECHERCHIERTE SACHGEBIETE (Int. Cl.4) |
| A | FR-A- 815 816 (ALBA)<br>--- | 1 | |
| A | DE-A-3 134 823 (PFLEIDERER)<br>--- | 1 | |
| A | CA-A- 911 861 (HOREL)<br>--- | 1 | |
| A | DE-A-2 822 771 (PAULI)<br>--- -/- | 1,3,9 | |

Der vorliegende Recherchenbericht wurde für alle Patentansprüche erstellt.

| Recherchenort<br>DEN HAAG | Abschlußdatum der Recherche<br>11-03-1987 | Prüfer<br>DE GUSSEM J.L. |
|---|---|---|

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

| | Europäisches Patentamt | EUROPÄISCHER RECHERCHENBERICHT | | |
|---|---|---|---|---|

## EINSCHLÄGIGE DOKUMENTE

Seite 3

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| A | FR-A-2 261 849 (HARDTLE)<br>* Anspruch 4; Figur 5 * | 7 | |
| A | US-A-1 621 963 (VALENTINE)<br>* Seite 2, Zeilen 69-104 * | 7 | |
| A | WO-A-8 402 105 (FLESSUM) | 7,8 | |
| A | US-A-1 744 875 (EDWARDS)<br>* Seite 2, Zeilen 31-39 * | 8 | |

RECHERCHIERTE SACHGEBIETE (Int. Cl.4)

Der vorliegende Recherchenbericht wurde für alle Patentansprüche erstellt.

| Recherchenort | Abschlußdatum der Recherche | Prüfer |
|---|---|---|
| DEN HAAG | 11-03-1987 | DE GUSSEM J.L. |